# EUROPÄISCHE PATENTSCHRIFT

(11) **EP 3 158 778 B1**
(45) Veröffentlichungstag und Bekanntmachung des Hinweises auf die Patenterteilung: **29.08.2018**
(21) Anmeldenummer: 15729150.1
(22) Anmeldetag: 12.06.2015
(51) Int. Cl.: H04S 5/00

(54) **VORRICHTUNG UND VERFAHREN ZUM ERZEUGEN UND ABSPIELEN EINER KOPIERGESCHÜTZTEN WELLENFELDSYNTHESE-AUDIODARSTELLUNG**
APPARATUS AND METHOD FOR PRODUCING AND PLAYING BACK A COPY-PROTECTED WAVE FIELD SYNTHESIS AUDIO RENDITION
DISPOSITIF ET PROCÉDÉ DE GÉNÉRATION ET DE LECTURE D'UNE REPRÉSENTATION AUDIO DE SYNTHÈSE DE CHAMPS D'ONDES PROTÉGÉE CONTRE LA COPIE

(30) Priorität: 20.06.2014 DE 102014211899
(43) Veröffentlichungstag der Anmeldung: 26.04.2017
(73) Patentinhaber: Fraunhofer-Gesellschaft zur Förderung der angewandten Forschung e.V., 80686 München (DE)
(72) Erfinder: SPORER, Thomas, 90766 Fürth (DE); RODIGAST, René, 07639 Tautenhain (DE)
(74) Vertreter: Zinkler, Franz
(86) Internationale Anmeldenummer: PCT/EP2015/063209
(87) Internationale Veröffentlichungsnummer: WO 2015/193196

(56) Entgegenhaltungen:
- EP-A1- 2 560 159
- DE-A1-102008 014 311
- US-A1- 2003 103 645

## Beschreibung

Ausführungsbeispiele der vorliegenden Erfindung beziehen sich auf eine Vorrichtung zum Erzeugen einer kopiergeschützten Wellenfeldsynthese-Audiodarstellung einer Audioszene, auf ein zugehöriges Verfahren sowie auf eine Vorrichtung zur Wiedergabe einer kopiergeschützten Wellenfeldsynthese-Audiodarstellung einer Audioszene und ein zugehöriges Verfahren. Weitere Ausführungsbeispiele beziehen sich auf ein Computerprogramm zur Durchführung der Verfahren.

Bei Wellenfeldsynthese-Wiedergabesystemen werden die Rohdaten, d. h. die Audioobjekte, welche typischer als Audiodatei vorliegen, sowie die Metadaten abgespeichert bzw. übertragen und in Abhängigkeit von den tatsächlich vorhandenen Lautsprechern im Wiedergaberaum bzw. der tatsächlich vorhandenen Lautsprecherkonfiguration (z. B. einem Array mit über 30 räumlich verteilten Lautsprechern) gerendert. Hierfür enthalten die Metadaten typischerweise Positionsinformationen für die beiliegenden Audioobjekte. Beim Rendern erfolgt dann in Abhängigkeit der Positionsinformationen und in Abhängigkeit der vorhandenen Lautsprecherkonfiguration ein Verteilen der Audiodateien auf die Mehrzahl der Lautsprecherkanäle mit der Zielsetzung, die einzelnen Audioobjekte im Wiedergaberaum virtuell zu positionieren. Im Ergebnis wird typischerweise eine Audiodatei, zugehörig zu einem Audioobjekt, über alle Lautsprecherkanäle, aber mit unterschiedlicher Skalierung (d. h. mit unterschiedlicher Lautheit) und mit unterschiedlicher Verzögerung ausgegeben.

In manchen Situationen muss die Hardware im Wiedergaberaum auf ein Minimum reduziert werden, was es notwendig macht, dass dort kein Renderer (im Folgenden Wellenfeldsynthese-Prozessor genannt), sondern nur ein Abspieler mit einer Lautsprecheranordnung installiert wird. Bei einem derartigen Ansatz ist zu beachten, dass die Wellenfeldsynthese-Audiodarstellung einer Audioszene für die richtige Lautsprecherkonfiguration vorgerendert wird bzw. dass die richtig vorgerenderte Wellenfeldsynthese-Audiodarstellung im richtigen Wiedergaberaum abgespielt wird, da eine Wiedergabe einer Audiodarstellung im falschen Raum (d. h. also mit einer falschen Lautsprecheranordnung) typischerweise zu einer deutlichen Reduktion der Audioqualität führt. Beispielsweise kann ausgehend von diesem Konzept bei Kinos mit mehreren Räumen und unterschiedlichen Lautsprechersetups eine Fehlbedienung mit anschließenden Qualitätseinbußen nicht ausgeschlossen werden.

Weitere Anforderungen, insbesondere im Zusammenhang mit vorgerenderten Inhalten werden seitens des Rechtemanagements gestellt, so dass hier Maßnahmen geschaffen werden müssen, so dass nur eine Wiedergabe eines bestimmten Inhalts in einem Wiedergaberaum erfolgen darf, wenn dafür eine Lizenz vorliegt. Zur Lösung hierzu gibt es im Stand der Technik einige Ansatzpunkte.

Die EP 2 560 159 B1 beschreibt ein Codiersvstem zur Kinoidentifikation und ein zugehöriges Verfahren. Die US 2003/0103645 A1 beschreibt das Integrieren von digitalen Wasserzeichen in einen Multimedia-Inhalt. Die DE 10 2008 014 311 A1 beschreibt einen Einbetter zum Einbetten eines einzubettenden Wasserzeichens.

Beispielsweise wäre eine Lösung, insbesondere für die Lizenzproblematik, die Nutzung von Verschlüsselung und die Speicherung des Schlüssels separiert z. B. in einem Dongle (allgemein: tragbares Speichermedium). Hierbei wird vorteilhafterweise der Dongle so konzipiert, dass dieser hinreichend schwer zu kopieren ist. Durch dieses Vorgehen kann sichergestellt werden, dass nur mit dem Dongle die Wiedergabe ermöglicht wird. Nachteil dieses Ansatzes ist, dass bei Verlust des Dongles der gesamte lizenzierte Inhalt nicht mehr abgespielt werden kann. Außerdem ist die zu verschlüsselnde Datenrate hierbei verhältnismäßig hoch, was der Zielsetzung der Reduzierung der Hardware auf das Wesentlichste entgegensteht.

Alternativ zu der Verschlüsselung der Audiodatei kann auch ein sogenanntes Audio-Watermarking (Im Folgenden Audio-Wasserzeichen genannt) verwendet werden. Hierbei wird dem Audiosignal ein durch das Nutzsignal verdecktes, d. h. unhörbares Signal eingeprägt. Beispielsweise kann zur Vermeidung von hörbaren Störungen durch das Wasserzeichen das Wasserzeichen nur in einzelnen Kanälen eingeprägt werden. Auf der Wiedergabeseite kann ein Watermark-Detektor (Im Folgenden: Wasserzeichen-Sucher) das Wasserzeichen extrahieren und die Wiedergabe verweigern, wenn das Wasserzeichen nicht zu der Identifikationsnummer des Wiedergabesystems passt, für das eine Lizenz vorliegt. Diese Watermarking-Technologie ist auch mit der Technologie des Vorrenderns kompatibel, so dass anhand eines Watermarks eine Zugehörigkeit einer vorgerenderten Wellenfeldsynthese-Audiodarstellung zu einem speziellen Wiedergaberaum im Vorfeld festgelegt werden kann.

Ein prinzipielles Problem beim Kopierschutz durch Audio-Watermarking ist, dass ein mutwilliges Zerstören mittels Try-and-Error (Vorgehen durch Versuch und Irrtum) möglich ist. Hintergrund ist, dass der "Angreifer" Zugriff auf das Watermark hat, und das Signal so lange verändern kann, bis das Wasserzeichen nicht mehr erkennbar ist. Insbesondere bei dem oben angesprochenen Ansatz, entsprechend welchem das Wasserzeichen nur in einen einzelnen Kanal, wie z. B. einen Lautsprecherkanal einer vorgerenderten Wellenfeldsynthese-Audiodarstellung, eingeprägt wird, besteht das Problem, dass durch Vergleich der Korrelati on zweier benachbarter Kanäle ein gezielter Angriff erleichtert wird. Deshalb besteht der Bedarf nach einem verbesserten Ansatz.

Aufgabe der vorliegenden Erfindung ist es, eine Vorrichtung und ein Verfahren zu schaffen, dass den Kopierschutz für Wellenfeldsynthese-Audiodarstellungen und insbesondere für vorgerenderte Wellenfeldsynthese-Audiodarstellung verbessert.

Das Problem wird durch die Gegenstände der unabhängigen Ansprüche gelöst.

Ein erstes Ausführungsbeispiel schafft eine Vorrichtung zum Erzeugen einer kopiergeschützten Wellenfeldsynthese-Audiodarstellung einer Audioszene mit einer Mehrzahl von Audioobjekten, wobei jedes Audioobjekt eine Audiodatei und Positionsinformationen umfasst. Die Vorrichtung umfasst einen Wasserzeichen-Einbetter zum Einbetten eines Wasserzeichens in die Audiodatei von wenigstens einem der Mehrzahl von Audioobjekten, um eine modifizierte Audiodatei für das wenigstens eine Audioobjekt zu erzeugen, wobei das Wasserzeichen einen Wiedergaberaum spezifiziert. Ferner umfasst die Vorrichtung einen Wellenfeldsynthese-Prozessor zum Erzeugen der kopiergeschützten Wellenfeldsynthese-Audiodarstellung der Audioszene unter Verwendung einer Lautsprecherkonfiguration des speziellen Wiedergaberaums der modifizierten Audiodatei und der Position für das wenigstens Audioobjekt.

Ein zweiter Aspekt der vorliegenden Erfindung bezieht sich auf ein zugehöriges Verfahren, welches die Schritte Einbetten des Wasserzeichens und Erzeugen der kopiergeschützten Wellenfeldsynthese-Audiodarstellung umfasst.

Diesen ersten zwei Erfindungsaspekten liegt also die Erkenntnis zugrunde, dass ein Wasserzeichen bzw. Watermark in eine vorgerenderte Wellenfeldsynthese-Audiodarstellung eingefügt wird, so dass das Wasserzeichen den Wiedergaberaum, für den die Wellenfeldsynthese-Audiodarstellung berechnet ist, spezifiziert. Erfindungsgemäß erfolgt das Einfügen des Wasserzeichens in die ungerenderte Audiodaten (Rohdaten), also in die zugespielten Audiospuren vor dem Rendern, so dass das Wasserzeichen mit zumindest einem Audioobjekt verknüpft ist (und nicht mit einem spezifischen Lautsprecherkanal). Das Einprägen des Wasserzeichens in die Rohdaten ermöglicht, dass das Wasserzeichen nach den Rendern über alle Lautsprecherkanäle bzw. zumindest eine Gruppe der Lautsprecherkanäle verteilt ist. Dies hat, insbesondere im Vergleich zum Stand der Technik, den Vorteil, dass das Wasserzeichen nicht mit einfachen Mitteln aus der vorgerenderten Wellenfeldsynthese-Audiodarstellung wieder entfernt werden kann. Hierzu trägt auch bei dass das Wasserzeichen zusammen mit seinem "Trägerobjekt" in Abhängigkeit der Positionsinformationen für das jeweilige Objekt zeitlich variiert.
Entsprechend einem weiteren Ausführungsbeispiel wird das Wasserzeichen so in die Audiodatei des Audioobjekts eingebettet, dass das Wasserzeichen mittels Nach-Verdeckung, Vor-Verdeckung, Simultan-Verdeckung und/oder Rausch-Verdeckung zumindest aus psychoakustischer Sicht unhörbar ist.
Entsprechend einem Ausführungsbeispiel kann das Wasserzeichen in die Audiodatei des Audioobjekts mit einer bestimmten Charakteristik, wie z. B. in das lauteste Audioobjekt, eingebettet werden. Das Einfügen des Wasserzeichens in das lauteste Audioobjekt bietet den Vorteil, dass die psychoakustische Verdeckung maximiert wird.
Weitere Ausführungsbeispiele schaffen (entsprechend einem dritten Aspekt) eine Vorrichtung zur Wiedergabe einer kopiergeschützten Wellenfeldsynthese-Audiodarstellung einer Audioszene in einem speziellen Wiedergaberaum. Die Vorrichtung umfasst einen Wasserzeichen-Sucher zum Suchen eines Wasserzeichens, das den speziellen Wiedergaberaum spezifiziert, in mehreren Lautsprecherkanälen der kopiergeschützten Wellenfeldsynthese-Audiodarstellung der Audioszene, wobei das Wasserzeichen über mehrere Lautsprecherkanäle verteilt ist, und einen Abspieler zum Abspielen der kopiergeschützten Wellenfeldsynthese-Audiodarstellung nur dann, wenn der Wasserzeichen-Sucher das Wasserzeichen, das den speziellen Wiedergaberaum spezifiziert, in mehreren der Lautsprecherkanälen gefunden hat.
Entsprechend einem vierten Erfindungsaspekt wird ein Verfahren zur Wiedergabe einer kopiergeschützten Wellenfeldsynthese-Audiodarstellung einer Audioszene geschaffen, das die Schritte des Suchens des Wasserzeichens und des Abspielens der kopiergeschützten Wellenfeldsynthese-Audiodarstellung umfasst.
Entsprechend einem Ausführungsbeispiel ist in dem Wasserzeichen-Sucher das zu suchende Wasserzeichen (also das Wasserzeichen zu dem entsprechenden Raum) gespeichert oder kann, z. B. über eine Schnittstelle, von einem Datenträger eingelesen werden.
Entsprechend einem weiteren Ausführungsbeispiel umfasst der Wasserzeichen-Sucher einen Frequenzspreizer und einen Korrelator, die dazu dienen, eine Korrelation zwischen dem zu suchenden Wasserzeichen, welches mittels des Frequenzspreizers in eine spektrale Form überführt ist, und einem Signal in mehreren der Lautsprecherkanäle zu ermitteln.

Entsprechend einem fünften und sechsten Erfindungsaspekt wird ein Computerprogramm geschaffen, mittels welchem die Schritte oder Teilschritte der oben beschriebenen Verfahren durchgeführt werden können.

Ausführungsbeispiele der vorliegenden Erfindung werden anhand der beiliegenden Zeichnungen erläutert. Es zeigen:
- Fig. 1a: ein schematisches Blockschaltbild einer Vorrichtung zum Erzeugen einer kopiergeschützten Wellenfeldsynthese-Audiodarstellung gemäß einem ersten Ausführungsbeispiel;
- Fig. 1b: ein schematisches Flussdiagramm eines Verfahrens zum Erzeugen einer kopiergeschützten Wellenfeldsynthese-Audiodarstellung gemäß einem weiteren Ausführungsbeispiel;
- Fig. 2a: ein schematisches Blockschaltbild einer Vorrichtung zur Wiedergabe einer kopiergeschützten Wellenfeldsynthese-Audiodarstellung gemäß einem zweiten Ausführungsbeispiel;
- Fig. 2b: ein schematisches Flussdiagramm eines Verfahrens zur Wiedergabe einer kopiergeschützten Wellenfeldsynthese-Audiodarstellung gemäß einem weiteren Ausführungsbeispiel;
- Fig. 3: ein schematisches Blockschaltbild eines Wellenfeldsynthese-Prozessors zur Erläuterung der Schritte beim Wellenfeldsynthese-Rendern; und
- Fig. 4: ein schematisches Blockschaltbild eines Wasserzeichen-Einbetters zur Erläuterung der Funktionsweise beim Einbetten eines Wasserzeichens in eine Audiodatei.

Ausführungsbeispiele der vorliegenden Erfindung werden nachfolgend anhand der beiliegenden Figuren im Detail erläutert werden, wobei darauf hingewiesen wird, dass gleiche Elemente und Elemente mit gleichen Funktionen mit gleichen Bezugszeichen versehen sind, so dass die Beschreibung derer austauschbar ist oder aufeinander angewendet werden kann.

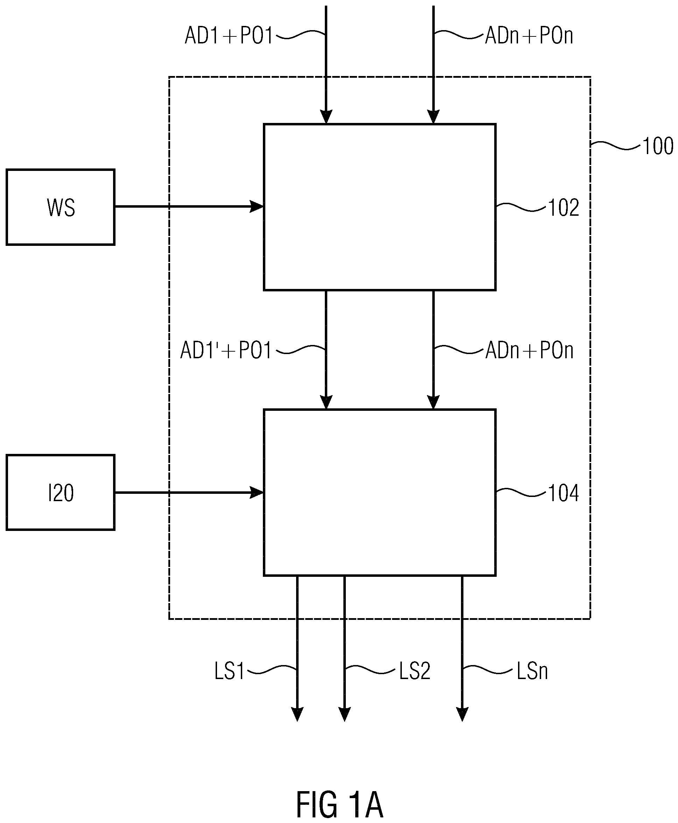

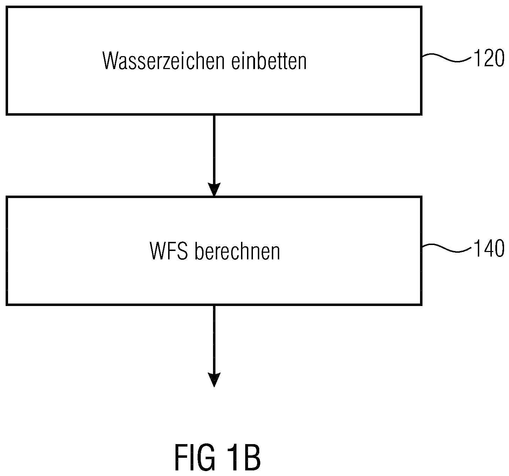

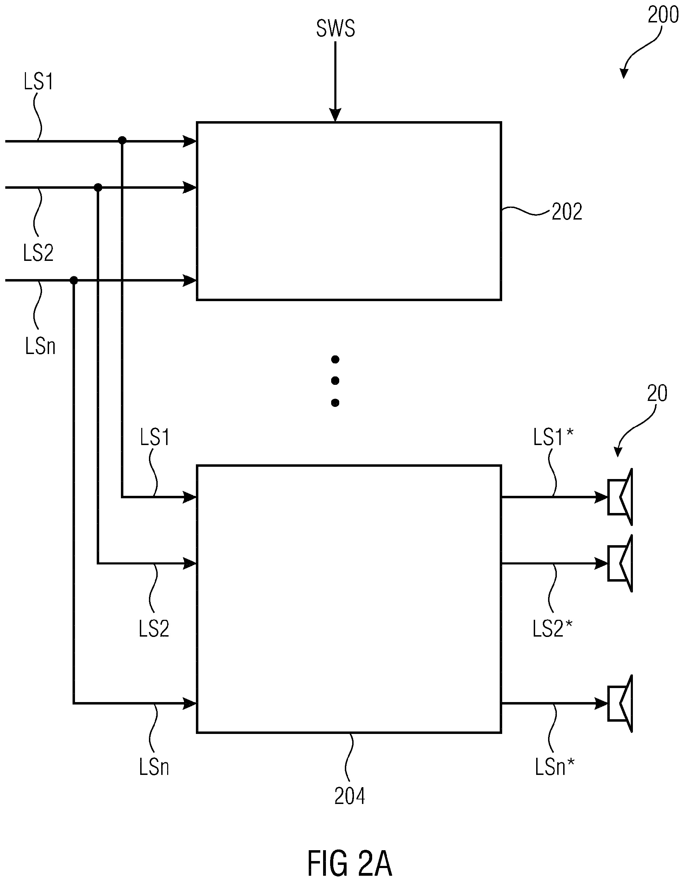

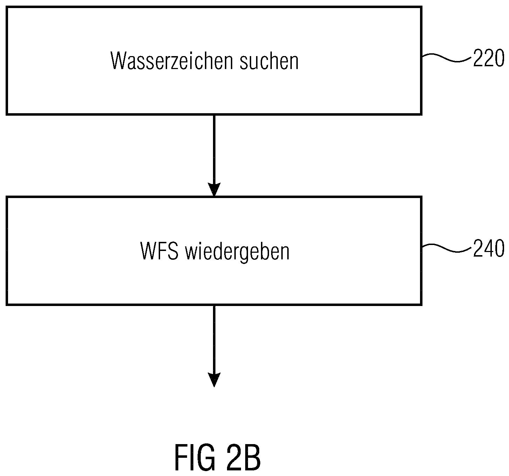

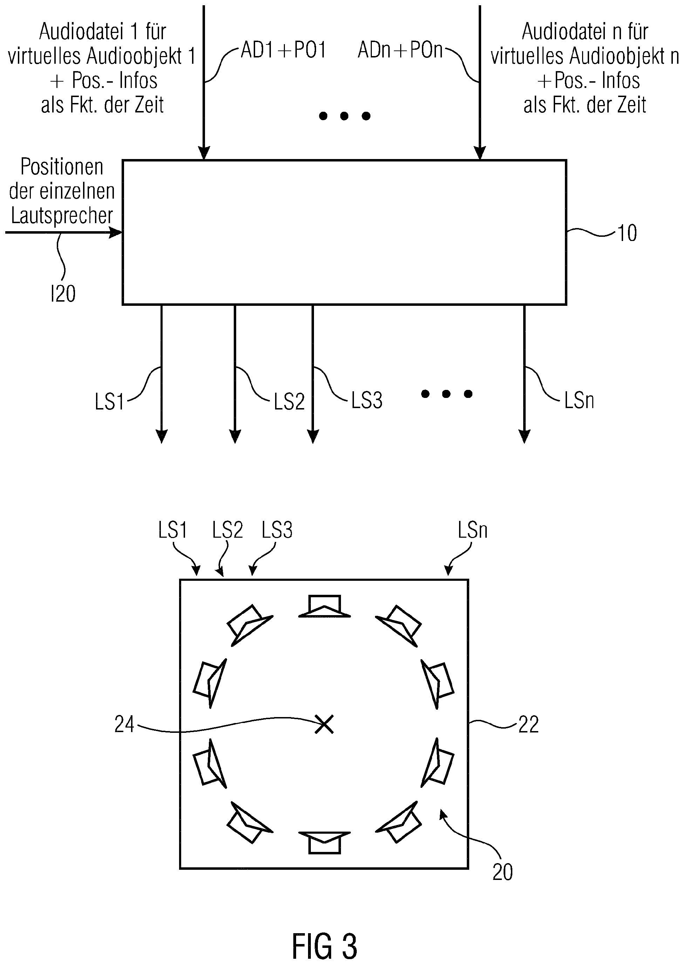

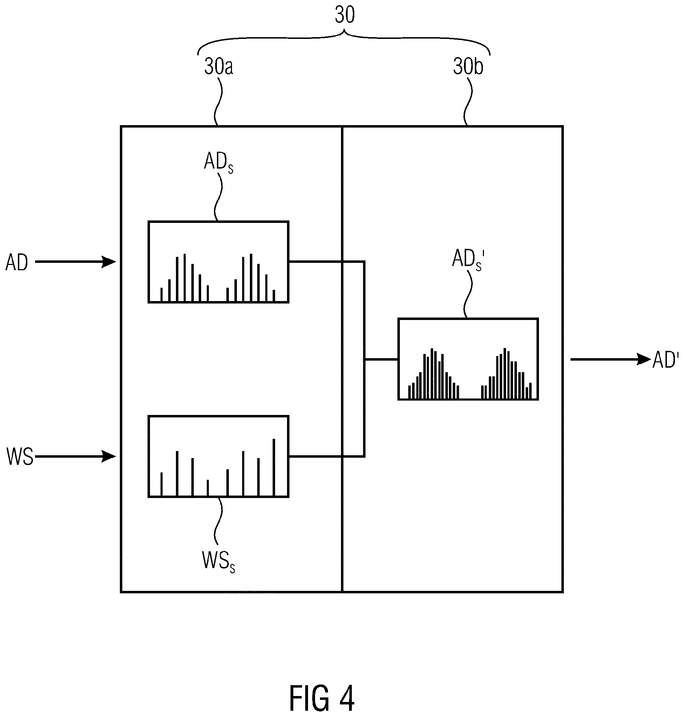

Bevor nun auf die Ausführungsbeispiele der vorliegenden Erfindung anhand von Fig. 1a, 1b, 2a und 2b im Detail eingegangen wird, wird anhand von Fig. 3 ein Wellenfeldsynthese-Prozessor erläutert und anhand von Fig. 4 ein Wasserzeichen-Einbetter.

Fig. 3 zeigt einen Wellenfeldsynthese-Prozessor 10 zusammen mit einer schematischen Lautsprecheranordnung 20.

Die Lautsprecheranordnung 20 umfasst typischerweise eine Vielzahl von einzelnen Lautsprechern, die über Lautsprecherkanäle LS1-LSn angesteuert werden. Die Lautsprecheranordnung mit den beispielsweise 40 oder 60 Lautsprechern kann z.B. als 360°-Array ausgeführt sein, welches in einem speziellen Wiedergaberaum 22 angeordnet ist. Bei dem Raum 22 kann es sich beispielsweise um einen Kinosaal handeln, in welchem um den Zuschauer 24 herum die Lautsprecher der Lautsprecheranordnung 20 gruppiert sind bzw. zu einem Array angeordnet sind. Infolgedessen sind die Lautsprecher beispielsweise hinter der Leinwand, hinter dem Zuschauer sowie links und rechts neben dem Zuhörer angeordnet.

Also ist der Zuhörer an dem Punkt P vor der Vielzahl der Lautsprecher des Lautsprecher-Arrays 20 umgeben, so dass bei entsprechender Ansteuerung der Lautsprecheranordnung 20 mittels der Lautsprecherkanäle LS1 und LSn (z. B. bei einseitiger Ansteuerung einer Teilmenge der Lautsprecher der Lautsprecheranordnung 20) ein Audioobjekt virtuell im Raum positioniert werden kann bzw. bewegt werden kann. Diese virtuelle Positionierung bzw. virtuelle Bewegung von dem einen Audioobjekt ist sehr stark abhängig von der genauen Kenntnis der Lautsprecherkonfiguration (vgl. Lautsprecheranordnung 20), so dass die einzelnen Lautsprecherkanäle LS1-LSn nur für eine spezielle Lautsprecheranordnung 20 in einem speziellen Wiedergaberaum 22 ermittelbar sind. Die Ermittlung bzw. Berechnung wird durch den Wellenfeldsynthese-Prozessor 10 durchgeführt, wie nachfolgend erläutert wird.

Der Wellenfeldsynthese-Prozessor 10 ist ausgebildet auf Basis einer Mehrzahl von Audioobjekten AO1-AOn, welche jeweils eine Audiodatei und eine Positionsinformation (definiert als Position in einem kartesischen Koordinatensystem zusammen mit einer Bewegungsinformation über die Zeit) umfassen, unter Verwendung einer Information (I20) über die Lautsprecherkonfiguration 20 (Anzahl und Position) des speziellen Wiedergaberaums 22 eine Vielzahl an Lautsprecherkanälen LS1-LSn, zu berechnen.

Hierzu umfasst der Wellenfeldsynthese-Prozessor eine Vielzahl von Eingängen (vgl. AD1-ADn), über welche eine Vielzahl von Audiosignalen für verschiedene Audioobjekte zugeführt wird. So empfängt der Eingang (vgl. AD1) z. B. eine Audiodatei 1 für ein erstes Audioobjekt sowie zugeordnete Positionsinformationen desselben. In einem Kinosetting beispielsweise wäre das Audioobjekt 1 z. B. die Sprache eines Schauspielers, der sich von der linken Seite entlang zur rechten Seite der Leinwand oder möglicherweise zusätzlich noch vom Zuschauer weg bzw. zum Zuschauer hin bewegt. Die Audiodatei 1 wäre dann die tatsächliche Sprache dieses Schauspielers, während die Positionsinformation als Funktion der Zeit, die zu einem bestimmten Zeitpunkt die aktuelle Position des ersten Schauspielers im Aufnahmesetting darstellt. Dagegen wäre die Audiodatei n die Sprache, beispielsweise eines weiteren Schauspielers, der sich gleich oder anders als der erste Schauspieler bewegt. Die aktuelle Position des anderen Schauspielers wird durch mit dem Audiosignal n synchronisierte Positionsinformationen dem Wellenfeldsynthese-Prozessor 10 mitgeteilt. In der Praxis existieren verschiedene virtuelle Audioobjekte, je nach Aufnahmesetting, wobei die Audiodatei des jeweiligen Audioobjekts als eigener Track dem Wellenfeldsynthese-Prozessor 10 zugeführt wird.

Wie es vorstehend dargelegt worden ist, gibt der Wellenfeldsynthese-Prozessor entweder in direkt abspielbarer analoger Form, bevorzugt aber in digitaler Form eine Vielzahl an Lautsprecherkanälen LS1-LSn aus, die dann direkt über die Lautsprecher der Lautsprecheranordnung 20 abgespielt werden können. Der Wellenfeldsynthese-Prozessor 10 erhält als Eingangsinformation I20 die Positionen der einzelnen Lautsprecher in dem Wiedergabesetting (vgl. Hörraum 22 bzw. Lautsprecheranordnung 20), wie beispielsweise einem Kinosaal, mitgeteilt.

Ferner können über diesen Informationseingang I20 auch noch weitere Informationen, wie beispielsweise über die Raumakustik, eingelesen werden.

Allgemein gesagt, wird das Lautsprechersignal, das beispielsweise dem Lautsprecherkanal LS1 zugeordnet ist, eine Überlagerung von Komponentensignalen der virtuellen Audioobjekte sein, dahin gehend, dass das Lautsprechersignal für den Lautsprecher LS1 eine erste Komponente, die auf das erste Lautsprecherobjekt 1 zurückgeht, eine zweite Komponente, die auf das Audioobjekt 2 zurückgeht sowie eine n-te Komponente, die auf das Audioobjekt n zurückgeht, umfassen. Die einzelnen Komponentensignale werden linear subponiert, also nach ihrer Berechnung addiert, um die lineare Subposition am Ohr des Zuhörers nachzubilden, der in einem realen Setting eine lineare Überlagerung der von ihm wahrnehmbaren Schallquelle hört. Infolge dieser Superpositionierung ist das erste, das zweite und das n-te Audioobjekt in jedem Lautsprecherkanal LS1-LSn enthalten, wobei die Audiodatei je Lautsprecherkanal LS1 und LSn mit unterschiedlichen Skalierungsfaktoren skaliert ist und/oder mit unterschiedlichen Verzögerungsfaktoren verzögert ist. Hierbei sei angemerkt, dass die Skalierung in einzelnen Lautsprecherkanälen LS1-LSn auch bis auf null erfolgen kann, so dass ein Audioobjekt in einem Lautsprecherkanal nicht mehr zu hören ist.

Fig. 4 zeigt einen Wasserzeichen-Einbetter 30 zum Einbetten eines Wasserzeichens WS in eine Audiodatei AD, um eine modulierte Audiodatei AD' zu erzeugen.

Der Wasserzeichen-Einbetter 30 liest sowohl die Audiodatei AD, welcher beispielsweise als PCM-Signal oder als Bitstrom von zeitdiskreten Audioabtastwerten vorliegt, als auch das einzubettende Wasserzechen WS ein. Diese zwei eingelesenen Digitalsignale AD und WS werden nun z.B. mittels eines Frequenzspreizers (vgl. Stufe 30a) in eine spektrale Form, d.h. konkret in Audiospektralwerte AD_{S} und Wasserzeichenspektralwerte WS_{S} überführt. Das Überführen von WS nach WS_{S} kann beispielsweise durch Multiplizieren des Datensignals WS mit einem Rauschsignal (weißes Rauschen) oder Pseudorauschsignal erfolgen. Das Überführen von AD nach AD_{S} kann beispielsweise unter Zuhilfenahme einer schnellen Fourier-Transformation direkt umgerechnet werden. Ausgehend von der Audiodatei AD bzw. der spektralen Form der Audiodatei AD_{S} ist es möglich, ein psychoakustisches Modell zu ermitteln, welches unter anderem Bereiche zur Maskierung (z.B. Bereiche mit einer hohen Gesamtenergie) bzw. (zeitliche) Maskierschwellen des Audiosignals anzeigt. Maskierschwellen geben Auskunft wie das Audiosignal verändert werden kann, sodass die Veränderung irrelevant für den resultierenden Höreindruck ist.

Zur Maskierung stehen unterschiedliche Mechanismen, wie z. B. die zeitliche Maskierung (Nach-Verdeckung, Vor-Verdeckung oder Synchron-Verdeckung) aber auch eine Rausch-Verdeckung (Verdeckung von Rauschen durch Signal oder Verdeckung von Signal durch Rauschen) zur Verfügung. Unter Kenntnis dieser Maskierschwellen bzw. der Maskierbereiche des AD_{S}, unter Nutzung welcher ein Datensignal in maskierter Form in die AD eingefügt werden kann, erfolgt nun das Kombinieren von AD_{S} und WS_{S} in einer zweiten Stufe (vgl. Bezugszeichen 30b). Bei dem Schritt des Kombinierens erfolgt im Detail eine Überlagerung des Audiosignals AD_{S} mit einer gewichteten Version des Datensignals WS_{S}, wobei bei der Gewichtung die ermittelten Maskierschwellen bzw. die ermittelten Maskierbereiche berücksichtigt werden. Das Ergebnis dieser Überlagerung ist das modifizierte Audiosignal AD' bzw. AD_{S}' (in der spektralen Variante). Durch dieses Vorgehen ist es möglich, eine Audiodatei AD so weit zu modifizieren, dass diese Träger für ein Datensignal, wie z. B. ein Wasserzeichen WS ist, ohne dass es beim Abspielen der Audiodatei AD' zu einer für den Menschen hörbaren Veränderung der Audiowiedergabe kommt.

Fig. 1a zeigt eine Vorrichtung 100 zum Erzeugen einer kopiergeschützten Wellenfeldsynthese-Audiodarstellung einer Audioszene. Die Vorrichtung 100 umfasst Eingänge für eine Mehrzahl an Audioobjekten (vgl. AD1+PO1 bzw. ADn+POn) und Ausgänge für Vielzahl von Lautsprecherkanälen LS1-LSn. Die Vorrichtung 100 umfasst ferner einen Wasserzeichen-Einbetter 102 und einen Wellenfeldsynthese-Prozessor 104. Der Wasserzeichen-Einbetter 102 ist eingangsseitig, also aufseiten der Eingänge für die Audioobjekte AD1+PO1 und ADn+POn angeordnet. Der Wellenfeldsynthese-Prozessor 104 ist ausgangsseitig, also aufseiten der Ausgänge für die Lautsprecherkanäle LS1-LSn vorgesehen. Nachfolgend wird die Funktionsweise der Vorrichtung 100 mit Bezugnahme auf Fig. 1b, welches das zugehörige Verfahren zeigt, beschrieben.

Die Wellenfeldsynthese-Audiodarstellung der Audioszenen basiert zumindest auf einer Mehrzahl an Audioobjekten (vgl. AD1+PO1 bzw. ADn+POn). Jedes Audioobjekt umfasst deshalb, wie oben bereits dargestellt, eine Audiodatei AD1 oder ADn sowie eine zugehörige Positionsinformation PO1 oder POn.

In einem ersten Schritt bettet die Vorrichtung 100 (vgl. Fig. 1b, Schritt 120) das Wasserzeichen WS, welches dem Wasserzeichen-Einbetter 102 als Digitalsignal vorliegt, in zumindest eine Audiodatei, also entweder AD1 oder ADn der Mehrzahl der Audioobjekte ein. Das Wasserzeichen spezifiziert einen speziellen Wiedergaberaum, für welchen die Wellenfeldsynthese-Audiodarstellung gerendert wird. Hierbei kann das Wasserzeichen eine ID oder individuell einmalige ID des Wiedergaberaums, des Abspielgeräts in dem Wiedergaberaum oder allgemein einen Key, der mit dem Raum zugeordnet ist, umfassen. Die Einbettung kann entsprechend dem oben beschriebenen Vorgehen erfolgen. Das Ergebnis der Einbettung ist zumindest eine modifizierte Audiodatei AD1' oder ADn' (hier AD1').

Der Wasserzeichen-Einbetter 102 gibt also die modifizierte Audiodatei AD1' zusammen mit der Positionsinformation PO1 aus und leitet ferner die nicht modifizierte Audiodatei ADn zusammen mit der Positionsinformation POn weiter. Wenn der Wasserzeichen-Einbetter 102 das Wasserzeichen entsprechend weiteren Ausführungsbeispielen in mehrere Audiodatei AD1 und ADn einbettet erfolgt eine Ausgabe mehrere modifizierter Audiodatei AD1' und ADn' zusammen mit den Positionsinformationen PO1 und POn. Alternativ könnten die Positionsinformationen auch nicht durch den Wasserzeichen-Einbetter 102 weitergeleitet werden, sondern direkt dem Wellenfeldsynthese-Prozessor 104 zugeführt werden.

Entsprechend weiteren Ausführungsbeispielen kann der Wasserzeichen-Einbetter 102 auch das Wasserzeichen nur in eine Audiodatei mit einer besonderen Charakteristik einbetten. Die Charakteristik kann beispielsweise eine relative Lautstärke eines Audioobjekts gegenüber den anderen Audioobjekten sein oder eine relative Aktivität eines Audioobjekts im Vergleich zu den anderen Objekten. Also ist der Wasserzeichen-Einbetter 102 dazu ausgebildet, die Mehrzahl der Audioobjekte hinsichtlich einer gesuchten Charakteristik zu untersuchen und das für die Einbettung des Wasserzeichens auszuwählen.

Auch wenn der Wasserzeichen-Einbetter 102 als ein solcher beschrieben wurde, der die Funktionalität des Wasserzeichen-Einbetters, wie in Fig. 4 beschrieben, aufweist, kann dieser auch anders artig ausgebildet sein und andere Einbettungsmechanismen für Wasserzeichen nutzen.

Das zweite Funktionselement der Vorrichtung 100 ist der Wellenfeldsynthese-Prozessor 104, der ausgehend von der Vielzahl an Audioobjekten ADn+POn, wobei zumindest ein Audioobjekt eine modifizierte Audiodatei AD1' umfasst, eine Wellenfeldsynthese-Audiodarstellung berechnet, also die Skalierung der einzelnen Audioobjekte AD1 '+PO1 und ADn+POn für den jeweiligen Wiedergaberaum vornimmt (vgl. Fig. 1b, Schritt 140), um so die Audioobjekte in skalierter, verzögerter und summierter Form mittels der einzelnen Lautsprecherkanäle LS1-LSn auszugeben. Hierzu erhält der Wellenfeldsynthese-Prozessor neben den Audiodateien AD1'/ADn und Positionsinformationen PO1/POn der Audioobjekte auch noch eine Information über die Lautsprecherkonfiguration I20. Die Berechnung erfolgt grundsätzlich wie oben erläutert. Die Audiodarstellung der Audioszene wird danach als Vielzahl von Lautsprecherkanälen LS1-LSn ausgegeben und kann auf ein Speichermedium, wie z. B. eine Festplatte oder Blu-ray, gespeichert werden, wobei die Vielzahl der Lautsprecherkanäle LS1-LSn bevorzugt separat gespeichert sind.

Im Ergebnis ist das Wasserzeichen (Audio Watermark) über alle oder zumindest mehrere Lautsprecherkanäle LS1-LSn (statisch und zeitlich) verteilt und hat die gleiche akustische Position wie die einzelnen Audioobjekte. Hierdurch ist es unter dem Gesichtspunkt der Psychoakustik optimal unhörbar, da die gleiche Richtung auch die gleiche maximale Verdeckung bedeutet. Ferner kann sichergestellt werden, dass das Wasserzeichen nicht mittels einfacher Mittel, wie z. B. einem Vergleich einzelner Lautsprecherkanäle detektiert und entfernt werden kann. Hintergrund hierzu ist, dass das Wasserzeichen, allerdings in unterschiedlicher Skalierung und Verzögerung über alle oder zumindest einen Großteil der Lautsprecherkanäle verteilt ist, so dass keine Korrelation zwischen Kanälen erkennbar ist, die einen Rückschluss auf das Wasserzeichen zulässt.

Fig. 2a zeigt eine Vorrichtung 200 zur Wiedergabe einer kopiergeschützten Wellenfeldsynthese-Audiodarstellung der Audioszene. Die Vorrichtung 200 umfasst einen Wasserzeichen-Sucher 202 und einen Abspieler 204. Die Vorrichtung 200 umfasst eine Datenschnittstelle für die Lautsprecherkanäle LS1-LSn, auf die sowohl durch den Wasserzeichen-Sucher 202 und den Abspieler 204 zugegriffen werden kann. Der Abspieler 204 ist einerseits informatorisch mit dem Wasserzeichen-Sucher 202 verbunden und andererseits mit dem Lautsprecher-Array 20 entweder direkt oder über einen Verstärker für die Vielzahl der Lautsprecherkanäle, hier bezeichnet mit LS1*-LSn*, gekoppelt. Nachfolgend die Funktionsweise der Vorrichtung 200 zusammen mit dem zugehörigen Verfahren, das der Vorrichtung 200 zugrunde liegt, (vgl. Fig. 2b) erläutert.

Die Wellenfeldsynthese-Audiodarstellung, welche beispielsweise auf einem mobilen Datenträger gespeichert sein kann, wird in die Vorrichtung 200 in Form von bereits gerenderten Lautsprecherkanälen LS1-LSn eingelesen, wobei die einzelnen Lautsprecherkanäle LS1-LSn beiden Komponenten 202 und 204 der Vorrichtung 200 zur Verfügung stehen.

In einem ersten Schritt (vgl. Fig. 2b, Schritt 220) erfolgt die Suche des zu suchenden Wasserzeichens SWS, welches entweder in dem Wasserzeichen-Sucher 202 gespeichert ist oder von extern eingelesen werden kann. Das Einlesen des zu suchenden Wasserzeichens SWS kann beispielsweise mittels eines Dongles oder allgemein mittels eines externen Speichermediums, welches mit der Vorrichtung 200 verbunden wird, erfolgen. Das zu suchende Wasserzeichen SWS entspricht dem Bezug nehmend auf Fig. 1 erläuterten Wasserzeichen WS. Zur Suche des zu suchenden Wasserzeichens SWS wird dieses typischerweise im Vorfeld aufbereitet, wobei das Aufbereiten im Prinzip analog zum Einfügen erfolgt. Also wird das Wasserzeichen, z. B. mittels eines Rauschgenerators (Frequenzspreizers) in eine spektrale Form überführt. Diese spektrale Version des zu suchenden Wasserzeichens SWS kann dann mittels eines Korrelators mit den Lautsprecherkanälen LS1-LSn verglichen werden. Bevorzugterweise ist der Wasserzeichen-Sucher 202 dazu ausgebildet, das zu suchende Wasserzeichen SWS in der Mehrzahl der Lautsprecherkanäle LS1-LSn zu suchen.

Entsprechend einem weiteren Ausführungsbeispiel kann das Wasserzeichen, wenn dieses beispielsweise dem lautesten Audioobjekt zugeordnet ist, auch nur in dem lautesten Lautsprecherkanal gesucht werden, da der lauteste Lautsprecherkanal typischerweise auch das lauteste Objekt umfasst. Hierbei sei angemerkt, dass dies allerdings nicht notwendigerweise gilt, insbesondere dann wenn mehrere räumlich benachbarte Audioobjekte lauter sind als das individuell lauteste Objekt.

Wenn also das Wasserzeichen in mehreren Lautsprecherkanälen mittels Korrelation ermittelt ist, kann ein Freigabezeichen dem Abspieler 204 übermittelt werden, der dann die Wiedergabe der Wellenfeldsynthese-Audiodarstellung freigibt.
Infolgedessen wird dann durch den Abspieler 204 die Audiodarstellung widergegeben (vgl. Fig. 2b, Schritt 240), wobei die eigentliche Wiedergabe im Prinzip nur einer Weiterleitung der Lautsprechersignale LS1-LSn, beispielsweise in verstärkter Form als Lautsprechersignale LS1*-LSn* zu der Lautsprecheranordnung 20 darstellt.
Entsprechend einem weiteren Ausführungsbeispiel wäre auch ein aktives Verhindern der Wiedergabe durch den Abspieler 204 ausgehend von dem Wasserzeichen-Sucher 202 denkbar. Dies hat den Vorteil, dass das Zerstören des Wasserzeichens in den Lautsprecherkanälen LS1-LSn dennoch nicht zu einem Erfolg führt, dass eine Wiedergabe der Lautsprecherkanäle LS1-LSn bzw. der Wellenfeldsynthese-Audiodarstellung erfolgt.
Insgesamt bietet das oben beschriebene Konzept den Vorteil, dass kein separater Renderer aufseiten des Abspielers notwendig ist und so hier die Rechenleistung gering gehalten werden kann. Durch diese reduzierte Rechenleistung kann der vorgerenderte und durch das Audiowasserzeichen gesicherte Inhalt auch von weniger perfomanten Plattformen, wie Embedded Bords oder DSPs in Verbindung mit einem Datenspeicher abgespielt werden. Diese Player können dann als mobile Systeme, z. B. in Schalterdosen, Wandkästen, Fremdgeräten oder als separate Geräte ihre Anwendung finden.
Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein erfindungsgemäß codiertes Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (100) zum Erzeugen einer kopiergeschützten Wellenfeldsynthese-Audiodarstellung einer Audioszene mit einer Mehrzahl von Audioobjekten, wobei jedes Audioobjekt eine Audiodatei (AD1, AD2, ADn) und Positionsinformation (PS1, PS2, PSn) umfasst, mit folgenden Merkmalen:
einem Wasserzeichen-Einbetter (102) zum Einbetten eines Wasserzeichens (WS) in die Audiodatei (AD1, AD2, ADn) von wenigstens einem der Mehrzahl von Audioobjekten, um eine modifizierte Audiodatei (AD1') für das wenigstens eine Audioobjekt zu erzeugen,
wobei das Wasserzeichen (WS) einen speziellen Wiedergaberaum (22), für welchen die Wellenfeldsynthese-Audiodarstellung in Abhängigkeit einer in dem speziellen Wiedergaberaum (22) vorhandene Lautsprecherkonfiguration (I20) gerendert wird, spezifiziert; und
einem Wellenfeldsynthese-Prozessor (104) zum Erzeugen der kopiergeschützten Wellenfeldsynthese-Audiodarstellung der Audioszene unter Verwendung der Lautsprecherkonfiguration (I20) des speziellen Wiedergaberaums (22), der modifizierten Audiodatei (AD1') und der Positionsinformation (PS1, PS2, PSn) für das wenigstens eine Audioobjekt.

2. Vorrichtung (100) gemäß Anspruch 1, wobei der Wasserzeichen-Einbetter (102) ausgebildet ist, um das Wasserzeichen (WS) in die Audiodatei (AD1, AD2, ADn) des Audioobjekts der Mehrzahl von Audioobjekte einzubetten, das eine vorbestimmte Charakteristik aufweist.

3. Vorrichtung (100) gemäß Anspruch 2, wobei die vorbestimmte Charakteristik die relative Lautheit eines Audioobjekts der Mehrzahl von Audioobjekten gegenüber den anderen Audioobjekten umfasst und/oder wobei die vorbestimmte Charakteristik die relative Aktivität eines Audioobjekts der Mehrzahl von Audioobjekten gegenüber den anderen Audioobjekten umfasst.

4. Vorrichtung (100) gemäß einem der vorherigen Ansprüche, wobei der Wellenfeldsynthese-Prozessor (104) ausgebildet ist, um zum Erzeugen der kopiergeschützten Wellenfeldsynthese-Audiodarstellung der Audioszene eine Mehrzahl an Lautsprecherkanäle (LS1, LS2, LSn) zu berechnen, wobei die Mehrzahl der Lautsprecherkanäle (LS1, LS2, LSn) die Mehrzahl der Audiodateien (AD1, AD2, ADn) der Audioobjekte umfasst, die je nach Positionsinformation (PS1, PS2, PSn) mit unterschiedlichen Skalierungsfaktoren skaliert sind und/oder mit unterschiedlichen Verzögerungsfaktoren verzögert sind.

5. Vorrichtung (100) gemäß Anspruch 4, wobei zumindest zwei der Mehrzahl der Lautsprecherkanäle (LS1, LS2, LSn) die eine modifizierte Audiodatei (AD1') für das wenigstens eine Audioobjekt in unterschiedlichen Skalierungen und/oder in unterschiedlichen Verzögerungen umfassen; und/oder
wobei die Mehrzahl der Lautsprecherkanäle (LS1, LS2, LSn) mindestens 40 Kanäle umfasst.

6. Vorrichtung (100) gemäß einem der vorherigen Ansprüche, wobei der Wasserzeichen-Einbetter (102) ausgebildet ist, das Wasserzeichen (WS) in ein Frequenzspektrum (AD_{S}) der Audiodatei (AD1, AD2, ADn) einzubetten.

7. Vorrichtung (100) gemäß einem der vorherigen Ansprüche, wobei der Wasserzeichen-Einbetter (102) das Wasserzeichen (WS) so in die Audiodatei (AD1, AD2, ADn) einbettet, dass das Wasserzeichen (WS) mittels Nach-Verdeckung, Vor-Verdeckung, Simultan-Verdeckung und/oder Rauschen-Verdeckung verdeckt wird.

8. Verfahren zum Erzeugen einer kopiergeschützten Wellenfeldsynthese-Audiodarstellung einer Audioszene mit einer Mehrzahl von Audioobjekten, wobei jedes Audioobjekt eine Audiodatei (AD1, AD2, ADn) und Positionsinformation (PS1, PS2, PSn) umfasst, mit folgenden Schritten:
Einbetten (120) eines Wasserzeichens (WS) in die Audiodatei (AD1, AD2, ADn) von wenigstens einem der Mehrzahl von Audioobjekten, um eine modifizierte Audiodatei (AD1') für das wenigstens eine Audioobjekt zu erzeugen,
wobei das Wasserzeichen (WS) einen speziellen Wiedergaberaum (22), für welchen die Wellenfeldsynthese-Audiodarstellung in Abhängigkeit einer in dem speziellen Wiedergaberaum (22) vorhandene Lautsprecherkonfiguration (I20) gerendert wird, spezifiziert; und
Erzeugen (140) der kopiergeschützten Wellenfeldsynthese-Audiodarstellung der Audioszene unter Verwendung der Lautsprecherkonfiguration (I20) des speziellen Wiedergaberaums (22), der modifizierten Audiodatei (AD1') und der Positionsinformation (PS1, PS2, PSn) für das wenigstens eine Audioobjekt.

9. Vorrichtung (200) zur Wiedergabe einer kopiergeschützten Wellenfeldsynthese-Audiodarstellung einer Audioszene in einem speziellen Wiedergaberaum (22), mit folgenden Merkmalen:
einem Wasserzeichen-Sucher (202) zum Suchen eines Wasserzeichens (WS), das den speziellen Wiedergaberaum (22) spezifiziert, in mehreren Lautsprecherkanälen (LS1, LS2, LSn) der kopiergeschützten Wellenfeldsynthese-Audiodarstellung der Audioszene, wobei das Wasserzeichen über mehrere Lautsprecherkanäle (LS1, LS2, LSn) verteilt ist.; und
einem Abspieler (204) zum Abspielen der kopiergeschützten Wellenfeldsynthese-Audiodarstellung nur dann, wenn der Wasserzeichen-Sucher (202) das Wasserzeichen (WS), das den speziellen Wiedergaberaum (22), für welchen die Wellenfeldsynthese-Audiodarstellung in Abhängigkeit einer in dem speziellen Wiedergaberaum (22) vorhandene Lautsprecherkonfiguration (I20) gerendert ist, spezifiziert, in mehreren der Lautsprecherkanälen (LS1, LS2, LSn) gefunden hat.

10. Vorrichtung gemäß Anspruch 9, wobei der Abspieler (204) die kopiergeschützte Wellenfeldsynthese-Audiodarstellung nicht abspielt, wenn der Wasserzeichen-Sucher (202) kein Wasserzeichen (WS) gefunden hat, welches mit dem gesuchten Wasserzeichen (SWS) übereinstimmt.

11. Vorrichtung gemäß einem der Ansprüche 9 oder 10, wobei das zu suchende Wasserzeichen (SWS) in dem Wasserzeichen-Sucher (202) gespeichert ist oder wobei die Vorrichtung eine Schnittstelle umfasst, über die ein transportierbarer Datenträger anschließbar ist, in dem das zu suchende Wasserzeichen (SWS) hinterlegt ist.

12. Vorrichtung gemäß einem der Ansprüche 9 bis 11, wobei der Wasserzeichen-Sucher (202) einen Frequenzspreizer und einen Korrelator umfasst, der ausgebildet ist, eine Korrelation zwischen dem zu suchenden Wasserzeichen (SWS), welches mittels des Frequenzspreizers in eine spektrale Form überführt ist, und einem Signal in den mehreren Lautsprecherkanälen (LS1, LS2, LSn) zu ermitteln.

13. Vorrichtung gemäß einem der Ansprüche 9 bis 11, wobei der Abspieler (204) mit einem Lautsprecher-Array (20) in dem speziellen Wiedergaberaum (22) verbunden ist, das eine Mehrzahl an Lautsprechern umfasst, wobei jeder Lautsprechern mit einem separaten Lautsprecherkanal (LS1, LS2, LSn) der Wellenfeldsynthese-Audiodarstellung der Audioszene angesteuert wird.

14. Verfahren zur Wiedergabe einer kopiergeschützten Wellenfeldsynthese-Audiodarstellung einer Audioszene in einem speziellen Wiedergaberaum (22), mit folgenden Schritten:
Suchen (220) eines Wasserzeichens (WS), das den speziellen Wiedergaberaum (22), für welchen die Wellenfeldsynthese-Audiodarstellung in Abhängigkeit einer in dem speziellen Wiedergaberaum (22) vorhandene Lautsprecherkonfiguration (I20) gerendert ist, spezifiziert, in mehreren Lautsprecherkanälen (LS1, LS2, LSn) der kopiergeschützten Wellenfeldsynthese-Audiodarstellung der Audioszene, wobei das Wasserzeichen in mehreren der Lautsprecherkanäle (LS1, LS2, LSn) verteilt ist; und
Abspielen (240) der kopiergeschützten Wellenfeldsynthese-Audiodarstellung nur dann, wenn das Wasserzeichen (WS), das den speziellen Wiedergaberaum (22) spezifiziert, in mehreren der Lautsprecherkanälen (LS1, LS2, LSn) gefunden ist.

15. Computerprogramm mit einem Programmcode zur Durchführung des Verfahrens nach Anspruch 8 oder 14, wenn das Programm auf einem Computer abläuft.

## Claims

1. Apparatus (100) for generating a copy-protected wave field synthesis audio representation of an audio scene with a plurality of audio objects, wherein each audio object includes an audio file (AD1, AD2, ADn) and position information (PS1, PS2, PSn), comprising:
a watermark embedder (102) for embedding a watermark (WS) into the audio file (AD1, AD2, ADn) of at least one of the plurality of audio objects for generating a modified audio file (AD1') for the at least one audio object,
wherein the watermark (WS) specifies a specific reproduction room (22) for which the wave field synthesis audio representation is rendered in dependence on a loudspeaker configuration (I20) existing in the specific reproduction room (22); and
a wave field synthesis processor (104) for generating the copy-protected wave field synthesis audio representation of the audio scene by using the loudspeaker configuration (I20) of the specific reproduction room (22), the modified audio file (AD1') and the position information (PS1, PS2, PSn) for the at least one audio object.

2. Apparatus (100) according to claim 1, wherein the watermark embedder (102) is configured to embed the watermark (WS) into the audio file (AD1, AD2, ADn) of that audio object of the plurality of audio objects which comprises a predetermined characteristic.

3. Apparatus (100) according to claim 2, wherein the predetermined characteristic includes the relative loudness of an audio object of the plurality of audio objects with respect to the other audio objects and/or wherein the predetermined characteristic includes the relative activity of an audio object of the plurality of audio objects with respect to the other audio objects.

4. Apparatus (100) according to any of the preceding claims, wherein the wave field synthesis processor (104) is configured to calculate, for generating the copy-protected wave field synthesis audio representation of the audio scene, a plurality of loudspeaker channels (LS1, LS2, LSn), wherein the plurality of loudspeaker channels (LS1, LS2, LSn) includes the plurality of audio files (AD1, AD2, ADn) of those audio objects that are scaled with different scaling factors and/or delayed with different delay factors as a function of the position information (PS1, PS2, PSn).

5. Apparatus (100) according to claim 4, wherein at least two of the plurality of loudspeaker channels (LS1, LS2, LSn) include the one modified audio file (AD1') for the at least one audio object in different scalings and/or in different delays; and/or
wherein the plurality of loudspeaker channels (LS1, LS2, LSn) include at least 40 channels.

6. Apparatus (100) according to any of the preceding claims, wherein the watermark embedder (102) is configured to embed the watermark (WS) into a frequency spectrum (AD_{S}) of the audio file (AD1, AD2, ADn).

7. Apparatus (100) according to any of the preceding claims, wherein the watermark embedder (102) embeds the watermark (WS) into the audio file (AD1, AD2, ADn) such that the watermark (WS) is masked by means of post-masking, pre-masking, simultaneous masking and/or noise masking.

8. Method for generating a copy-protected wave field synthesis audio representation of an audio scene with a plurality of audio objects, wherein each audio object includes an audio file (AD1, AD2, ADn) and position information (PS1, PS2, PSn), comprising:
embedding (120) a watermark (WS) into the audio file (AD1, AD2, ADn) of at least one of the plurality of audio objects for generating a modified audio file (AD1') for the at least one audio object,
wherein the watermark (WS) specifies a specific reproduction room (22) for which the wave field synthesis audio representation is rendered in dependence on a loudspeaker configuration (120) existing in the specific reproduction room (22); and generating (140) the copy-protected wave field synthesis audio representation of the audio scene by using the loudspeaker configuration (I20) of the specific reproduction room (22), the modified audio file (AD1') and the position information (PS1, PS2, PSn) for the at least one audio object.

9. Apparatus (200) for reproducing a copy-protected wave field synthesis audio representation of an audio scene in a specific reproduction room (22), comprising:
a watermark searcher (202) for searching for a watermark (WS), which specifies the specific reproduction room (22), in several loudspeaker channels (LS1, LS2, LSn) of the copy-protected wave field synthesis audio representation of the audio scene, the watermark being distributed across several loudspeaker channels (LS1, LS2, LSn); and
a player (204) for playing the copy-protected wave field synthesis audio representation only when the watermark searcher (202) has found the watermark (WS), which specifies the specific reproduction room (22) for which the wave field synthesis audio representation is rendered in dependence on a loudspeaker configuration (I20) existing in the specific reproduction room (22), in several loudspeaker channels (LS1, LS2, LSn).

10. Apparatus according to claim 9, wherein the player (204) does not play the copy-protected wave field synthesis audio representation when the watermark searcher (202) has not found any watermark (WS) that matches the watermark searched for (SWS).

11. Apparatus according to any of claims 9 or 10, wherein the watermark to be searched for (SWS) is stored in the watermark searcher (202) or wherein the apparatus includes an interface via which a portable data carrier in which the watermark to be searched for (SWS) is stored is stored.

12. Apparatus according to any of claims 9 to 11, wherein the watermark searcher (202) includes a frequency spreader and a correlator that is configured to determine a correlation between the watermark to be searched for (SWS), which has been transformed into a spectral form by means of the frequency spreader, and a signal in the several loudspeaker channels (LS1, LS2, LSn).

13. Apparatus according to any of claims 9 to 11, wherein the player (204) is connected to a loudspeaker array (20) in the specific reproduction room (22) which includes a plurality of loudspeakers, wherein each loudspeaker is controlled with a separate loudspeaker channel (LS1, LS2, LSn) of the wave field synthesis audio representation of the audio scene.

14. Method for reproducing a copy-protected wave field synthesis audio representation of an audio scene in a specific reproduction room (22), comprising:
searching (220) for a watermark (WS), which specifies the specific reproduction room (22) for which the wave field synthesis audio representation is rendered in dependence on a loudspeaker configuration (I20) existing in the specific reproduction room (22), in several loudspeaker channels (LS1, LS2, LSn) of the copy-protected wave field synthesis audio representation of the audio scene, the watermark being distributed in several ones of the loudspeaker channels (LS1, LS2, LSn); and
playing (240) the copy-protected wave field synthesis audio representation only when the watermark (WS) specifying the specific reproduction room (22) has been found in several ones of the loudspeaker channels (LS1, LS2, LSn).

15. Computer program having a program code for performing the method according to claim 8 or 14 when the program runs on a computer.

## Revendications

1. Dispositif (100) pour générer une représentation audio de synthèse de champ d'ondes protégée contre la copie d'une scène audio avec une pluralité d'objets audio, dans lequel chaque objet audio comporte un fichier audio (AD1, AD2, ADn) et une information de position (PS1, PS2, PSn), aux caractéristiques suivantes:
un incorporateur de filigrane (102) destiné à incorporer un filigrane (WS) dans le fichier audio (AD1, AD2, ADn) d'au moins l'un de la pluralité d'objets audio, pour générer un fichier audio modifié (AD1') pour l'au moins un objet audio,
dans lequel le filigrane (WS) spécifie un local de reproduction particulier (22) pour lequel la représentation audio de synthèse de champ d'ondes est rendue en fonction d'une configuration de haut-parleurs (I20) présente dans le local de reproduction particulier (22); et
un processeur de synthèse de champ d'ondes (104) destiné à générer la représentation audio de synthèse champ d'ondes protégée contre la copie de la scène audio à l'aide de la configuration de haut-parleurs (I20) du local de reproduction particulier (22), du fichier audio modifié (AD1') et de l'information de position (PS1, PS2, PSn) pour l'au moins un objet audio.

2. Dispositif (100) selon la revendication 1, dans lequel l'incorporateur de filigrane (102) est réalisé pour incorporer le filigrane (WS) dans le fichier audio (AD1, AD2, ADn) de l'objet audio de la pluralité d'objets audio qui présente une caractéristique prédéterminée.

3. Dispositif (100) selon la revendication 2, dans lequel la caractéristique prédéterminée comporte l'intensité de son relative d'un objet audio de la pluralité d'objets audio par rapport aux autres objets audio et/ou dans lequel la caractéristique prédéterminée comporte l'activité relative d'un objet audio de la pluralité d'objets audio par rapport aux autres objets audio.

4. Dispositif (100) selon l'une des revendications précédentes, dans lequel le processeur de synthèse de champ d'ondes (104) est réalisé pour calculer, pour générer la représentation audio de synthèse de champ d'ondes protégée contre la copie de la scène audio, une pluralité de canaux de haut-parleur (LS1, LS2, LSn), dans lequel la pluralité de canaux de haut-parleur (LS1, LS2, LSn) comporte la pluralité de fichiers audio (AD1, AD2, ADn) des objets audio qui, selon l'information de position (PS1, PS2, PSn), sont mis à l'échelle par différents facteurs de mise à l'échelle et/ou sont retardés par différents facteurs de retard.

5. Dispositif (100) selon la revendication 4, dans lequel au moins deux de la pluralité de canaux de haut-parleur (LS1, LS2, LSn) qui comportent un fichier audio modifié (AD1') pour l'au moins un objet audio à différentes mises à échelle et/ou avec différents retards; et/ou
dans lequel la pluralité de canaux de haut-parleur (LS1, LS2, LSn) comporte au moins 40 canaux.

6. Dispositif (100) selon l'une des revendications précédentes, dans lequel l'incorporateur de filigrane (102) est réalisé pour incorporer le filigrane (WS) dans un spectre de fréquences (ADs) du fichier audio (AD1, AD2, ADn).

7. Dispositif (100) selon l'une des revendications précédentes, dans lequel l'incorporateur de filigrane (102) incorpore le filigrane (WS) dans le fichier audio (AD1, AD2, ADn) de sorte que le filigrane (WS) soit masqué par post-masquage, pré-masquage, masquage simultané et/ou masquage par bruit.

8. Procédé pour générer une représentation audio de synthèse de champ d'ondes protégée contre la copie d'une scène audio avec une pluralité d'objets audio, dans lequel chaque objet audio comporte un fichier audio (AD1, AD2, ADn) et une information de position (PS1, PS2, PSn), aux étapes suivantes consistant à:
incorporer (120) un filigrane (WS) dans le fichier audio (AD1, AD2, ADn) d'au moins l'un de la pluralité d'objets audio, pour générer un fichier audio modifié (AD1') pour l'au moins un objet audio,
dans lequel le filigrane (WS) spécifie un local de reproduction particulier (22) pour lequel la représentation audio de synthèse de champ d'ondes est rendue en fonction d'une configuration de haut-parleurs (I20) présente dans le local de reproduction particulier (22); et
générer (140) la représentation audio de synthèse de champ d'ondes protégée contre la copie de la scène audio à l'aide de la configuration de haut-parleurs (I20) du local de reproduction particulier (22), du fichier audio modifié (AD1') et de l'information de position (PS1, PS2, PSn) pour l'au moins un objet audio.

9. Dispositif (200) pour reproduire une représentation audio de synthèse de champ d'ondes protégée contre la copie d'une scène audio dans un local de reproduction particulier (22), aux caractéristiques suivantes:
un chercheur de filigrane (202) destiné à rechercher, dans plusieurs canaux de haut-parleur (LS1, LS2, LSn) de la représentation audio de synthèse de champ d'ondes protégée contre la copie de la scène audio, un filigrane (WS) qui spécifie le local de reproduction particulier (22), le filigrane étant réparti sur plusieurs canaux de haut-parleur (LS1, LS2, LSn); et
un lecteur (204) destiné à reproduire la représentation audio de synthèse de champ d'ondes protégée contre la copie uniquement lorsque le chercheur de filigrane (202) a trouvé dans plusieurs canaux de haut-parleur (LS1, LS2, LSn) le filigrane (WS) qui spécifie le local de reproduction particulier (22) pour lequel la représentation audio de synthèse de champ d'ondes est rendue en fonction d'une configuration de haut-parleurs (I20) présente dans le local de reproduction particulier (22).

10. Dispositif selon la revendication 9, dans lequel le lecteur (204) ne reproduit pas la représentation audio de synthèse de champ d'ondes protégée contre la copie lorsque le chercheur de filigrane (202) n'a pas trouvé de filigrane (WS) qui coïncide avec le filigrane recherché (SWS).

11. Dispositif selon l'une des revendications 9 ou 10, dans lequel le filigrane à rechercher (SWS) est mémorisé dans le chercheur de filigrane (202), ou dans lequel le dispositif comporte une interface par l'intermédiaire de laquelle peut être raccordé un support de données transportable dans lequel est entreposé le filigrane à rechercher (SWS).

12. Dispositif selon l'une des revendications 9 à 11, dans lequel le chercheur de filigrane (202) comporte un étaleur de fréquences et un corrélateur qui est réalisé pour déterminer une corrélation entre le filigrane à rechercher (SWS) qui a été transféré à l'aide de l'étaleur de fréquences sous forme spectrale et un signal dans les plusieurs canaux de haut-parleur (LS1, LS2, LSn).

13. Dispositif selon l'une des revendications 9 à 11, dans lequel le lecteur (204) est connecté à un réseau de haut-parleurs (20) dans le local de reproduction particulier (22) comportant une pluralité de haut-parleurs, chaque haut-parleur étant activé par un canal de haut-parleur (LS1, LS2, LSn) séparé de la représentation audio de synthèse de champ d'ondes de la scène audio.

14. Procédé de reproduction d'une représentation audio de synthèse de champ d'ondes protégée contre la copie d'une scène audio dans un local de reproduction particulier (22), aux étapes suivantes consistant à:
rechercher (220), dans une pluralité de canaux de haut-parleur (LS1, LS2, LSn) de la représentation audio de synthèse de champ d'ondes protégée contre la copie de la scène audio, un filigrane (WS) qui spécifie le local de reproduction particulier (22) pour lequel la représentation audio de synthèse de champ d'ondes est rendue en fonction d'une configuration de haut-parleurs (120) présente dans le local de reproduction particulier (22), le filigrane étant réparti dans une pluralité de canaux de haut-parleur (LS1, LS2, LSn); et
reproduire (240) la représentation audio de synthèse de champ d'ondes protégée contre la copie uniquement lorsque le filigrane (WS) qui spécifie le local de reproduction particulier (22) a été trouvé dans plusieurs des canaux de haut-parleur (LS1, LS2, LSn).

15. Programme d'ordinateur avec un code de programme pour mettre en oeuvre le procédé selon la revendication 8 ou 14 lorsque le programme est exécuté sur un ordinateur.
